# EUROPÄISCHE PATENTANMELDUNG

(11) **EP 4 101 736 A1**
(43) Veröffentlichungstag der Anmeldung: **14.12.2022**
(21) Anmeldenummer: 22177990.3
(22) Anmeldetag: 09.06.2022
(51) Int. Cl.: B62D 6/10, B62D 7/22, G01L 5/22

(54) **LENKVORRICHTUNG FÜR EIN KRAFTFAHRZEUG**

(30) Priorität: 10.06.2021 DE 102021205882
(71) Anmelder: ZF Friedrichshafen AG, 88046 Friedrichshafen (DE)
(72) Erfinder: Becker, Ingo, 52441 Linnich (DE)

(57) **Zusammenfassung**

Lenkvorrichtung (1) für ein Kraftfahrzeug, welche Lenkvorrichtung (1) eine Erfassungseinrichtung (7) aufweist, die dazu ausgebildet ist, einen eine Bedienung eines Lenkelements der Lenkvorrichtung (1) betreffenden Parameter zu erfassen, wobei die Erfassungseinrichtung (7) dazu ausgebildet ist, den Parameter basierend auf einer Drehmomentmessung zu erfassen und die Lenkvorrichtung (1) wenigstens eine Dämpfungseinrichtung (4) zur Dämpfung von auf das Lenkelement übertragenen Schwingungen aufweist.

## Beschreibung

Die Erfindung betrifft eine Lenkvorrichtung für ein Kraftfahrzeug, welche Lenkvorrichtung eine Erfassungseinrichtung aufweist, die dazu ausgebildet ist, einen eine Bedienung eines Lenkelements der Lenkvorrichtung betreffenden Parameter zu erfassen.

Lenkvorrichtungen für Kraftfahrzeuge sind grundsätzlich aus dem Stand der Technik bekannt, mittels denen ein Bediener des Kraftfahrzeugs das Kraftfahrzeug lenken kann, beispielsweise über die Betätigung eines Lenkrads den Radwinkel der Vorderräder bzw. der Räder der Vorderachse einstellen kann. Hierbei sind ebenfalls Erfassungseinrichtungen bekannt, die dazu ausgebildet sind, Parameter zu erfassen, die die Lenkvorrichtung betreffen, insbesondere einen Lenkwinkel eines Lenkelements, beispielsweise eine Auslenkung eines Lenkrads aus einer Neutralstellung oder ein auf das Lenkelement durch den Benutzer aufgebrachtes Drehmoment, zu erfassen.

Hierzu sind grundsätzlich zwei Prinzipien bekannt, bei denen entweder eine Torsions-Winkelmessung vorgenommen wird, die eine Relativbewegung eines ersten Teilschafts der Lenkvorrichtung relativ zu einem zweiten Teilschaft der Lenkvorrichtung erfasst, um so festzustellen, wie weit das Lenkelement aus der Neutralstellung ausgelenkt wurde. Aus besagtem Torsions-Winkel kann anschließend ein durch den Benutzer aufgebrachtes Drehmoment ermittelt werden, beispielsweise, um das Drehmoment einer Unterstützungseinrichtung zuzuführen und mittels einer Unterstützungseinrichtung eine geeignete Kraft bzw. ein geeignetes Drehmoment zur Unterstützung der Lenkbewegung aufzubringen. Daneben ist es bekannt, direkt eine Drehmomentmessung vorzunehmen, d.h., das durch den Benutzer auf das Lenkelement aufgebrachte Drehmoment direkt zu erfassen, um ein seitens der Unterstützungseinrichtung aufzubringendes Drehmoment bestimmen zu können.

Bei der beschriebenen Winkelmessung ist hierbei üblicherweise die beschriebene Umwandlung bzw. Bestimmung des Drehmoments aus dem erfassten Torsions-Winkel nötig, sodass letztlich keine direkte Messung des Drehmoments stattfindet. Die Erfassungseinrichtung muss ferner einen Sensor aufweisen, der mit dem entsprechenden Teilschaft verbunden ist, der verdreht wird, um die Torsions-Winkelmessung durchführen zu können, sodass die Anordnungsmöglichkeiten und der Montageaufwand entsprechend erhöht ist. Üblicherweise ist ferner eine Entmagnetisierung des Bereichs der Lenkvorrichtung nötig, an dem die Erfassungseinrichtung angeordnet wird. Dementsprechend ist auch eine aufwändige Kalibrierung der Erfassungseinrichtung nötig. Ferner sind die realisierbaren Geometrien Bezug auf die Teilschäfte eingeschränkt.

Bei der beschriebenen Drehmomentmessung ist üblicherweise aufgrund der starren Verbindung der Lenkvorrichtung und der direkten Drehmomentmessung keine Möglichkeit gegeben, den Drehmomentverlauf bzw. Kraftverlauf bei der Betätigung des Lenkelements und somit das Lenkgefühl des Benutzers zu beeinflussen bzw. einzustellen, wie die von dem Benutzer erzeugte Lenkbewegung auf die Lenkung übertragen wird. Des Weiteren wird aufgrund der starren Verbindung eine Übertragung von Schwingungen, beispielsweise Vibrationen, die durch das Abrollen der Räder auf dem Fahrbahnbelag erzeugt und auf die Lenkvorrichtung übertragen werden, verstärkt gegeben.

Der Erfindung liegt die Aufgabe zugrunde eine demgegenüber verbesserte Lenkvorrichtung für ein Kraftfahrzeug anzugeben.

Die Aufgabe wird durch eine Lenkvorrichtung mit den Merkmalen des Anspruchs 1 gelöst. Vorteilhafte Ausgestaltungen sind Gegenstand der Unteransprüche.

Wie beschrieben, betrifft die Erfindung eine Lenkvorrichtung für ein Kraftfahrzeug, die eine Erfassungseinrichtung aufweist, die dazu ausgebildet ist, einen eine Bedienung eines Lenkelements der Lenkvorrichtung betreffenden Parameter zu erfassen. Die Erfindung beruht auf der Erkenntnis, dass die Erfassungseinrichtung dazu ausgebildet ist, den Parameter basierend auf einer Drehmomentmessung zu erfassen und die Lenkvorrichtung wenigstens eine Dämpfungseinrichtung zur Dämpfung der auf das Lenkelement übertragenen Schwingungen aufweist.

Die Erfassungseinrichtung basiert somit auf der zuvor beschriebenen Drehmomentmessung, d.h., dass durch die Erfassungseinrichtung das Drehmoment, das durch einen Bediener auf die Lenkvorrichtung übertragen wird, beispielsweise durch Betätigen des Lenkelements, also des Lenkrads, erfasst werden kann. Hierbei handelt es sich nicht um eine Torsions-Winkelmessung, die anschließend in ein entsprechendes Drehmoment konvertiert wird, sondern das Drehmoment wird in der Drehmomentmessung direkt gemessen. Eine derartige Drehmomentmessung kann beispielsweise basierend auf dem NCTS-Prinzip ("non-compliant torque sensor") durchgeführt werden. Hierbei wird insbesondere keine Verdrehung eines ersten Teilschafts relativ zu einem zweiten Teilschaft gemessen, sondern die Gefügeänderung des Teilschafts, an dem der Sensor der Erfassungseinrichtung angeordnet ist, um daraus direkt das Drehmoment zu messen.

Die zusätzlich vorgesehene Dämpfungseinrichtung besitzt grundsätzlich keine Auswirkung auf die Drehmomentmessung, sondern dient dazu, auf die Lenkvorrichtung übertragene Schwingungen, beispielsweise durch Abrollen der Räder auf einem Fahrbahnbelag, zu dämpfen, sodass die letztlich auf das Lenkelement übertragenen Schwingungen durch die Dämpfungseinrichtung gedämpft werden können. Zusätzlich oder alternativ ist die Dämpfungseinrichtung dafür vorgesehen, ein bestimmtes Lenkgefühl zu erzeugen, indem die Dämpfungseinrichtung bei der Bedienung des Lenkelements die dadurch erzeugte Bewegung gedämpft bzw. verändert überträgt, sodass der Bediener des Kraftfahrzeugs ein bestimmtes Feedback bzw. eine bestimmte Rückmeldung spürt.

Vorteilhafterweise ist es somit nicht nötig, eine Torsions-Winkelmessung durchzuführen und diese anschließend in ein Drehmoment zu übertragen. Die mit der Torsions-Winkelmessung verbundenen Nachteile, die zuvor beschrieben wurden, sind somit in der vorliegenden Lenkvorrichtung ausgeräumt. Die Nachteile, die mit der direkten Drehmomentmessung, wie zuvor beschrieben, einhergehen entfallen ebenfalls, da zusätzlich die Dämpfungseinrichtung vorgesehen ist, die die entsprechenden Nachteile beseitigt. Stattdessen werden die Vorteile der Drehmomentmessung gegenüber der Torsions-Winkelmessung vollständig ausgenutzt, insbesondere, dass keine Übertragung eines Winkels in ein Drehmoment nötig ist, der Sensor nicht fest mit einem der Teilschäfte verbunden, beispielsweise verschweißt werden muss, keine Entmagnetisierung notwendig ist und die Kalibrierung des Sensors für die Lenkvorrichtung entfällt. Der Kalibrierungsaufwand, insbesondere herstellerseitig, kann ferner entfallen. Des Weiteren bieten sich deutlich mehr anwendbare Geometrie bzw. Designs in Bezug auf die Anordnung und Ausgestaltung der Erfassungseinrichtung und der Lenkvorrichtung. Durch das Vorsehen der separaten Dämpfungseinrichtung wird ferner erreicht, dass das Lenkgefühl sowie die Dämpfung von Vibrationen positiv beeinflusst werden können.

Die Lenkvorrichtung kann ferner einen Aktor aufweisen, der dazu ausgebildet ist, in Abhängigkeit des Parameters eine Unterstützungskraft auf das Lenkelement aufzubringen. Der Aktor kann beispielsweise Bestandteil einer Unterstützungseinrichtung sein, die der Lenkvorrichtung zugeordnet ist bzw. zugeordnet werden kann. Die Erfassungseinrichtung bestimmt bzw. erfasst, wie zuvor beschrieben, den Parameter des Lenkelements, beispielsweise ein von dem Bediener auf das Lenkelement bewirktes Drehmoment. Basierend auf dem erfassten Drehmoment kann der Aktor anschließend eine Unterstützungskraft auf das Lenkelement aufbringen, um den Bediener bei der Bedienung des Lenkelements zu unterstützen, beispielsweise das Lenkrad bzw. das Lenkelement für den Bediener "leichtgängiger" zu machen.

Die Lenkvorrichtung kann ferner zwei Teilschäfte vorsehen, wobei die Dämpfungseinrichtung zwischen den beiden Teilschäften der Lenkvorrichtung angeordnet ist und die beiden Teilschäfte aneinander koppelt. Das Lenkelement, das zuvor beschrieben wurde, kann somit an einem der beiden Teilschäfte angebracht sein, sodass der Bediener bei der Bedienung des Lenkelements letztlich eine Bewegung des gekoppelten Teilschafts bewirkt. Die Bewegung wird hierbei über die Dämpfungseinrichtung an den jeweils anderen Teilschaft gekoppelt, sodass die Dämpfungseinrichtung die auf den zuerst beschriebenen Teilschaft bewirkte Drehbewegung gedämpft an den zweiten Teilschaft überträgt.

Ebenso werden Vibrationen bzw. Geräusche oder andere Effekte, die auf den zweiten, radseitigen, Teilschaft wirken durch die Dämpfungseinrichtung gedämpft und somit nicht ungedämpft an den ersten Teilschaft und somit das Lenkelement übertragen. Mit anderen Worten werden störende Geräusche und Vibrationen, die insbesondere durch einen Fahrbetrieb auf einem unebenen Untergrund erzeugt werden, nicht ungedämpft, sondern gedämpft, an das Lenkelement übertragen, was den Komfort des Bedieners erhöht. Insbesondere können Schwingungen und Geräusche hierbei auch vollständig gedämpft werden. Somit kann einer der beiden Teilschäfte als lenkungsseitig bzw. lenkelementseitig und der andere als getriebeseitig bzw. radseitig bezeichnet werden. Einer der Teilschäfte kann auch als Eingangsschaft und der andere als Ausgangsschaft bezeichnet werden.

Die Dämpfungseinrichtung kann insbesondere als Torsionsstab ausgebildet sein bzw. ein als Torsionsstab ausgebildetes Dämpfungselement aufweisen. Die Charakteristik des Dämpfungselements kann durch die Auswahl des geeigneten Torsionsstabs beeinflusst werden, ohne eine Anpassung der Sensorkalibrierung durchführen zu müssen. Insbesondere kann eine Rückstellkraft bzw. ein rückstellendes Drehmoment und dessen Verlauf eingestellt bzw. ausgewählt werden, das von dem Dämpfungselement erzeugt wird, wenn der Bediener das Lenkelement bedient. Dadurch ergibt sich ein charakteristischer Drehmomentverlauf bzw. Kraftverlauf, den der Benutzer als "Lenkgefühl" bei der Bedienung des Lenkelements wahrnimmt.

Mit anderen Worten wird, je nachdem welcher Torsionsstab ausgewählt wird, der Bediener beim Drehen des Lenkrads eine definierte haptische Rückmeldung erfahren, die den Komfort des Bedieners beim Bedienen des Lenkelements verbessert. Die Drehbewegung des ersten Teilschafts, der mit dem Lenkelement gekoppelt ist, an den zweiten Teilschaft wird somit über den Torsionsstab vorgenommen, wobei der erste Teilschaft zunächst den Torsionsstab tordiert und der Torsionsstab anschließend die Drehbewegung auf den zweiten Teilschaft überträgt. Die beiden Teilschäfte sind somit über den Torsionsstab gekoppelt, der als Dämpfungselement wirkt und somit störende Vibrationen und Geräusche, die radseitig entstehen, nur gefiltert bzw. gedämpft auf das Lenkelement überträgt.

Nach einer weiteren Ausgestaltung der Lenkvorrichtung kann vorgesehen sein, dass die Erfassungseinrichtung an einem Erfassungsabschnitt an dem ersten oder dem zweiten Teilschaft angeordnet ist. Wie eingangs bereits beschrieben, sind für die vorgeschlagene Lenkvorrichtung in Bezug auf die Erfassungseinrichtung mehrere Anordnungs- und Ausgestaltungsmöglichkeiten ausführbar. Grundsätzlich ist aufgrund des gewählten Erfassungsprinzips keine Einschränkung auf die Anordnung der Erfassungseinrichtung gegeben, sofern ein momentdurchfluteter Bereich des Schafts selektiert ist. Die Erfassungseinrichtung kann letztlich beliebig an einem der Teilschäfte angeordnet werden, sodass auf bestehende Bauraumanforderungen Rücksicht genommen werden kann.

Somit kann die Erfassungseinrichtung entweder an dem ersten oder dem zweiten Teilschaft angeordnet werden, wobei die Erfassungseinrichtung insbesondere an einem soliden Bereich, insbesondere an einem vollständig gefüllten Bereich, eines der Teilschäfte angeordnet werden kann, um die Erfassung des Drehmoments bzw. die Drehmomentmessung besonders Vorteil öfter ausführen zu können. Der solide Bereich kann beispielsweise als Vollwelle ausgebildet sein. Das sich das von dem Bediener aufgegebene Drehmoment letztlich von dem ersten Teilschaft auf den zweiten Teilschaft überträgt, besteht ein Drehmomentpfad bzw. eine Wirkkette, die es erlaubt, die Erfassungseinrichtung letztlich beliebig an einer Stelle des Drehmomentpfads anzuordnen. Dies bietet insbesondere Vorteile gegenüber winkelbasierten Messprinzipien, da diese in Bezug auf ihre Anordnungsmöglichkeiten auf den sich relativ bewegenden Teilschaft eingeschränkt sind.

Bei der beschriebenen Erfassungseinrichtung ist insbesondere vorgesehen, dass ein Erfassungsabschnitt definiert wird, an dem die Erfassungseinrichtung angeordnet wird, wobei die Erfassungseinrichtung ein auf den Erfassungsabschnitt wirkendes Drehmoment erfassen kann. Wie bereits beschrieben, wird in Bezug auf das Erfassen des Drehmoments eine Drehmomentmessung verstanden, das bedeutet, dass hierzu keine Torsions-Winkelmessung erforderlich ist. Das von dem Bediener auf das Lenkelement und somit auf den ersten und zweiten Teilschaft aufgegebene Drehmoment verformt den Erfassungsabschnitt dabei auf einer vergleichsweise kleinen Skala, insbesondere in einem mikroskopischen Bereich. Der Erfassungsabschnitt kann, wie zuvor beschrieben, beliebig gewählt werden. Insbesondere bieten sich Abschnitte der Lenkvorrichtung als Erfassungsabschnitt an, die vergleichsweise solide ausgeführt sind, sodass das wirkende Drehmoment eine Gefügeänderung des Erfassungsabschnitts bewirkt und keine Verdrehung, d.h. keine makroskopische Winkeländerung, bewirkt.

Die Erfassungseinrichtung ist vorteilhafterweise dazu ausgebildet, das Drehmoment basierend auf einer Torsion zu erfassen. Das vorbeschriebene Erfassungsprinzip wird somit auch als Torsionsmessung bzw. Erfassung eines sogenannten "micro strain" verstanden. Die beschriebene Torsion unterscheidet sich somit von einer Verdrehung darin, dass die Gefügeänderung letztlich in einem mikroskopischen Bereich stattfindet und somit keine makroskopische Veränderung der Position bzw. Orientierung des Erfassungsabschnitts notwendig ist. Die Torsion spielt sich beispielsweise in einem Bereich von einem Hundertstel Grad ab, wohingegen eine makroskopische Verdrehung, beispielsweise in Form einer Torsions-Winkelmessung, mehrere Grad benötigt.

Die Erfassungseinrichtung ist nach einer weiteren Ausgestaltung der Lenkvorrichtung zur berührungslosen Erfassung ausgebildet. Dies ermöglicht insbesondere, dass keine direkte Verbindung zwischen der Erfassungseinrichtung und der Lenkvorrichtung bzw. dem Teilschaft, an dem der Erfassungsabschnitt angeordnet oder ausgewählt wurde, benötigt wird. Somit entfällt insbesondere das feste Verbinden der Erfassungseinrichtung mit der Lenkvorrichtung, wie dies bei einer Torsions-Winkelmessung erforderlich ist. Entsprechend ist es ebenfalls nicht nötig, eine aufwändige Kalibrierung, Entmagnetisierung und weitere Einstellungsaufwände, die bei Torsions-Winkelmessungen erforderlich sind, vorzunehmen. Stattdessen kann die Erfassungseinrichtung letztlich kontaktlos die Drehmomenterfassung vornehmen.

Wie zuvor beschrieben, kann die Erfassungseinrichtung ferner dazu ausgebildet sein, das Drehmoment berührungslos, insbesondere mittels akustischer Oberflächenwellen oder Dehnungsmessstreifen oder magnetostriktiv, zu erfassen. Als akustische Oberflächenwellen werden insbesondere sogenannte "surface acoustic waves" verstanden. Durch die beispielhaft aufgezählten Messprinzipien kann die, insbesondere berührungslose, Erfassung des Drehmoments durchgeführt werden, ohne dass eine Torsions-Winkelmessung erforderlich wird. Das konkrete Messprinzip kann anwendungsbezogen ausgewählt werden.

Daneben betrifft die Erfindung ein Kraftfahrzeug, umfassend eine zuvor beschriebene Lenkvorrichtung. Sämtliche in Bezug auf die Lenkvorrichtung beschriebenen Vorteile, Einzelheiten und Merkmale sind vollständig auf das Kraftfahrzeug übertragbar.

Die Erfindung wird nachfolgend anhand eines Ausführungsbeispiels unter Bezugnahme auf die Fig. erläutert. Die Fig. ist eine schematische Darstellung und zeigt eine Lenkvorrichtung für ein Kraftfahrzeug.

Die Fig. zeigt einen Ausschnitt einer Lenkvorrichtung 1 für ein Kraftfahrzeug. Die Lenkvorrichtung 1 weist grundsätzlich zwei Teilschäfte 2, 3 auf, die über eine Dämpfungseinrichtung 4 miteinander gekoppelt sind. Die Dämpfungseinrichtung 4 weist hierbei ein Dämpfungselement 5 auf, das in diesem Ausführungsbeispiel als Torsionsstab ausgebildet ist. Hierbei kann ein erster Teilschaft 2 mit einem Lenkelement, beispielsweise einem Lenkrad und der zweite Teilschaft 3 radseitig, beispielsweise mit einem Lenkgetriebe, verbunden werden. Die grundsätzliche Zuordnung der Begriffe "erster Teilschaft" und "zweiter Teilschaft" ist grundsätzlich beliebig änderbar bzw. kann auch der erste Teilschaft 2 radseitig und der zweite Teilschaft 3 auf Seiten des Lenkelements angebunden werden.

In diesem Ausführungsbeispiel sind der erste Teilschaft 2 und der zweite Teilschaft 3 drehbar aneinander mittels einer Lagerungseinrichtung 6, beispielsweise einem Wälzlager oder Gleitlager, gelagert, sodass diese gegeneinander verdrehbar sind. Bewegt der Bediener des Kraftfahrzeugs somit das Lenkrad, wird zusammen mit dem Lenkrad bzw. allgemein dem Lenkelement, der erste Teilschaft 2 bewegt. Der erste Teilschaft 2 kann hierbei grundsätzlich gegenüber dem zweiten Teilschaft 3 verdreht werden, wobei das Dämpfungselement 5, das als Torsionsstab ausgebildet ist, die Drehbewegung an den zweiten Teilschaft 3 überträgt. Das Dämpfungselement 5 bewirkt somit basierend auf seinem charakteristischen Kraftverlauf bzw. Drehmomentverlauf eine bestimmte haptische Rückmeldung bei der Bedienung des Lenkelements. Ferner werden von dem Teilschaft 3 aufgenommene Vibrationen bzw. Geräusche, die beispielsweise durch das Abrollen der Räder des Kraftfahrzeugs auf einem bestimmten Fahrbahnuntergrund entstehen, durch die Dämpfungseinrichtung 4 gedämpft, sodass diese zumindest reduziert an den ersten Teilschaft 2 und somit das Lenkelement übertragen werden bzw. vollständig gedämpft werden können.

Die Lenkvorrichtung 1 weist ferner eine Erfassungseinrichtung 7 auf, die dazu ausgebildet ist, ein auf die Lenkvorrichtung 1, in diesem Ausführungsbeispiel auf den Teilschaft 3, bewirktes Drehmoment zu erfassen. Die Erfassungseinrichtung 7 basiert hierbei auf einem direkt messendes Drehmomentsensor-prinzip , sodass letztlich eine Torsion des Teilschafts 3 gemessen werden kann. Die Erfassungseinrichtung 7 arbeitet berührungslos, sodass keine mechanische Verbindung zwischen dem Teilschaft 3 und der Erfassungseinrichtung 7 besteht. Die Erfassungseinrichtung 7 ist an einem Erfassungsabschnitt 8 angeordnet, der letztlich beliebig auf einem momentendurchfluteten Schaft gewählt werden kann. In diesem Ausführungsbeispiel ist der Erfassungsabschnitt 8 in einem soliden Bereich des Teilschafts 3 gewählt. Grundsätzlich kann der Erfassungsabschnitt 8 an jedem weiteren beliebigen Teil, auch am Teilschaft 2, der Lenkvorrichtung 1 gewählt bzw. definiert werden, solange sich in diesem Abschnitt ein drehmomentwirkender Bereich befindet.

Ersichtlich bietet die gezeigte Lenkvorrichtung 1 den Vorteil, dass eine direkte Drehmomentmessung durch die Erfassungseinrichtung 7 möglich ist, die berührungslos eine Erfassung, beispielsweise magnetostriktiv, eine, insbesondere mikroskopische, einer Torsion des Teilschafts 3 bzw. allgemein des Erfassungsabschnitts 8, ausführen kann. Die Erfassung des Drehmoments erfolgt beispielsweise in einem mikroskopischen Bereich, beispielsweise in einem Bereich von einem Hundertstel Grad bezogen auf eine Längsachse des Teilschafts 3. Letztlich basiert die Erfassung des Drehmoments auf einer Gefügeänderung in dem Erfassungsabschnitt 8, anstelle einer bei einer Torsions-Winkelmessung üblichen Erfassung einer Drehbewegung des entsprechenden Erfassungsabschnitts. Zusätzlich wird über die Dämpfungseinrichtung 4 eine Dämpfung von Schwingungen, die auf den Teilschaft 2 übertragen werden können, erreicht. Außerdem wird ein bestimmter charakteristischer Drehmoment- bzw. Kraftverlauf durch das Dämpfungselement 5 erzeugt, nämlich bei einer Verdrehung des Teilschafts 2 relativ zu dem Teilschaft 3.

Das seitens der Erfassungseinrichtung 7 erfasste Drehmoment kann anschließend einer Steuerungseinrichtung zugeführt werden. Die Steuerungseinrichtung kann das zugeführte erfasste Drehmoment letztlich beliebig weiterverarbeiten. Zum Beispiel kann die Steuerungseinrichtung dazu ausgebildet sein, einen Aktor 9 anzusteuern, der dazu ausgebildet ist, eine Unterstützungskraft auf die Lenkvorrichtung 1, beispielsweise auf den Teilschaft 2, auszuüben. Die Unterstützungskraft unterstützt dabei den Bediener des Kraftfahrzeugs beim Ausführen der Lenkbewegung, beispielsweise in dem der Aktor 9 eine Unterstützungskraft bzw. ein unterstützendes Drehmoment auf den Teilschaft 2 bewirkt, dass das letztlich von dem Bediener des Kraftfahrzeugs aufzubringende Drehmoment auf das Lenkelement entsprechend reduziert. Hierzu wird grundsätzlich seitens der Erfassungseinrichtung 7 erfasst, welches Drehmoment von dem Benutzer aufgebracht wird, sodass über den Aktor 9 ein entsprechendes Unterstützungsdrehmoment bzw. eine Unterstützungskraft erzeugt werden kann.

Wie bereits beschrieben, sind die grundsätzliche Anordnung der Erfassungseinrichtung 7, des Aktors 9 sowie die Zuordnung der Teilschäfte 2, 3 zur Radseite bzw. Lenkelementseite beliebig wählbar bzw. änderbar.

### Bezugszeichen

- 1: Lenkvorrichtung
- 2, 3: Teilschaft
- 4: Dämpfungseinrichtung
- 5: Dämpfungselement
- 6: Lagerungseinrichtung
- 7: Erfassungseinrichtung
- 8: Erfassungsabschnitt
- 9: Aktor

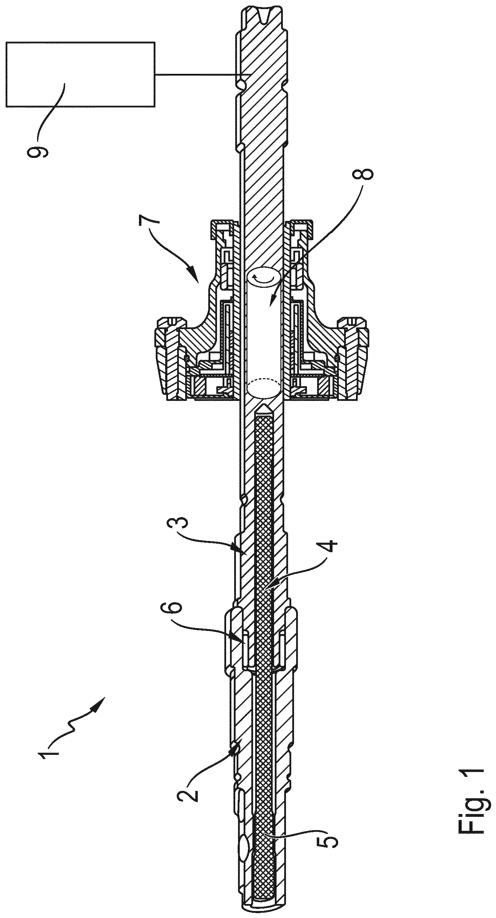

## Patentansprüche

1. Lenkvorrichtung (1) für ein Kraftfahrzeug, welche eine Erfassungseinrichtung (7) aufweist, die dazu ausgebildet ist, einen eine Bedienung eines Lenkelements der Lenkvorrichtung (1) betreffenden Parameter zu erfassen, **dadurch gekennzeichnet, dass** die Erfassungseinrichtung (7) dazu ausgebildet ist, den Parameter basierend auf einer Drehmomentmessung zu erfassen und die Lenkvorrichtung (1) wenigstens eine Dämpfungseinrichtung (4) zur Dämpfung der auf das Lenkelement übertragenen Schwingungen aufweist.

2. Lenkvorrichtung (1) nach Anspruch 1, **gekennzeichnet durch** einen Aktor (9) aufweist, der dazu ausgebildet ist, in Abhängigkeit des Parameters eine Unterstützungskraft auf das Lenkelement aufzubringen.

3. Lenkvorrichtung (1) nach Anspruch 1 oder 2, **dadurch gekennzeichnet, dass** die Dämpfungseinrichtung (4) zwischen zwei Teilschäften (2, 3) der Lenkvorrichtung (1) angeordnet ist und die beiden Teilschäfte (2, 3) aneinander koppelt.

4. Lenkvorrichtung (1) nach einem der vorangehenden Ansprüche, **dadurch gekennzeichnet, dass** die Dämpfungseinrichtung (4) ein als Torsionsstab ausgebildetes Dämpfungselement (5) aufweist.

5. Lenkvorrichtung (1) nach einem der vorangehenden Ansprüche, **dadurch gekennzeichnet, dass** die Erfassungseinrichtung (7) an einem Erfassungsabschnitt (8) an dem ersten oder dem zweiten Teilschaft (2, 3) angeordnet ist.

6. Lenkvorrichtung (1) nach einem der vorangehenden Ansprüche, **dadurch gekennzeichnet, dass** die Erfassungseinrichtung (7) dazu ausgebildet ist, ein auf den Erfassungsabschnitt (8) wirkendes Drehmoment zu erfassen.

7. Lenkvorrichtung (1) nach einem der vorangehenden Ansprüche, **dadurch gekennzeichnet, dass** die Erfassungseinrichtung (7) dazu ausgebildet ist, das Drehmoment basierend auf einer Torsion zu erfassen.

8. Lenkvorrichtung (1) nach einem der vorangehenden Ansprüche, **dadurch gekennzeichnet, dass** die Erfassungseinrichtung (7) zur berührungslosen Erfassung ausgebildet ist.

9. Lenkvorrichtung (1) nach einem der vorangehenden Ansprüche, **dadurch gekennzeichnet, dass** die Erfassungseinrichtung (7) dazu ausgebildet ist, das Drehmoment mittels akustischer Oberflächenwellen oder Dehnungsmessstreifen oder magnetostriktiv zu erfassen.

10. Kraftfahrzeug, umfassend eine Lenkvorrichtung (1) nach einem der vorangehenden Ansprüche.
